(19) Europäisches Patentamt

European Patent Office

Office européen des brevets

(11) **EP 1 408 131 A1**

(12) **EUROPÄISCHE PATENTANMELDUNG**

(43) Veröffentlichungstag:
**14.04.2004 Patentblatt 2004/16**

(51) Int Cl.[7]: **C22C 38/00**, C22C 38/12,
C21D 7/13

(21) Anmeldenummer: **02021820.2**

(22) Anmeldetag: **27.09.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(71) Anmelder: **CARL DAN. PEDDINGHAUS GMBH &
CO. KG**
**58256 Ennepetal (DE)**

(72) Erfinder:
• **Arndt, Johannes, Dr.**
**40764 Langenfeld (DE)**
• **Mros, Thomas**
**58256 Ennepetal (DE)**

(74) Vertreter: **HOFFMANN - EITLE**
**Patent- und Rechtsanwälte**
**Arabellastrasse 4**
**81925 München (DE)**

(54) **Stahlzusammensetzung und daraus hergestellte Gesenkschmiedeteile**

(57)    Die vorliegende Erfindung betrifft eine Stahlzusammensetzung, umfassend die folgenden Bestandteile in Gewichtsprozent:

| | |
|---|---|
| C : | 0,12-0,45 |
| Si : | 0,10-1,00 |
| Mn : | 0,50-1,95 |
| S : | 0,005-0,060 |
| Al : | 0,004-0,050 |
| Cr : | 0-0,60 |
| Ni : | 0-0,60 |
| Co : | 0-0,60 |
| W : | 0-0,60 |
| B : | 0-0,01 |
| Mo : | 0-0,60 |
| Cu : | 0-0,60 |
| Nb : | 0-0,050 |
| V : | 0,10-0,40 |
| N : | 0,015-0,040 |
| Rest : | Fe und unvermeidbare Verunreinigungen |

mit den Maßgaben:

1) Gew%V x Gew%N = 0,0021 bis 0,0120

2) 1,6xGew%S + 1,5xGew%Al + 2,4xGew%Nb + 1,2xGew%Ti = 0,035 bis 0,140

3) 1,2xGew%Mn + 1,4xGew%Cr+1,0xGew%Ni + 1,1xGew%Cu + 1,8xGew%Mo = 1,00 bis 3,50

Die Stahlzusammensetzung ist hervorragend geeignet zur Herstellung von Gesenkschmiedeteilen mit hoher Festigkeit und hoher Zähigkeit ohne Schlussvergütung, so dass diese als Fahrwerksteile für Personenkraftwagen und sogar Nutzfahrzeuge einsetzbar sind.

**Beschreibung**

Die vorliegende Erfindung bezieht sich auf eine neue Stahlzusammensetzung, daraus hergestellte Gesenkschmiedeteile, Verfahren zur Herstellung der Gesenkschmiedeteile und ihre Verwendung als Fahrwerksteile für Personenkraftwagen und Nutzfahrzeuge.

Geschmiedete Fahrwerkskomponenten für Kraftfahrzeuge sind sicherheitsrelevante Teile, für die neben einer hohen Festigkeit auch eine hohe Zähigkeit (charakterisiert z.B. durch die Kennwerte Bruchdehnung, Brucheinschnürung, Kerbschlagzähigkeit) gefordert wird. Deshalb wurden bis in die 1980er Jahre diese Komponenten fast ausnahmslos nach der Warmformgebung einer aufwendigen abschließenden Wärmebehandlung (Vergüten) unterzogen. In den 80er Jahren wurden dann die "Ausscheidungshärtenden Ferritisch-Perlitischen Stähle" (AFP-Stähle) entwickelt, bei denen die Festigkeitskennwerte ohne abschließende Wärmebehandlung durch Karbonitrid-Ausscheidungen in der ferritisch-perlitischen Stahlmatrix erreicht werden. Der Einsatz dieser Stähle ist heute bei geschmiedeten Stahlkomponenten für PKW-Fahrwerksteile die Regel. Bei der Verarbeitung dieser Stähle ist wichtig, die Temperaturführung so einzustellen, dass die Umwandlung des Stahls und die Ausscheidung der Karbonitride optimal aufeinander abgestimmt sind.

Bei Nutzfahrzeugen (NFZ) werden sicherheitsrelevante Fahrwerkskomponenten wie z.B. Achsschenkel bis heute nahezu ausschließlich aus Vergütungsstählen hergestellt, d.h. mit der aufwendigen abschließenden Wärmebehandlung. Dafür können folgende Gründe genannt werden:

Eine höhere Belastung der NFZ-Teile und deshalb eine höhere spezifizierte Festigkeit bei gleichzeitig geforderter höherer Zähigkeit des Werkstoffes. Insbesondere wird häufig die Erfüllung von Spezifikationen verlangt, die zu garantierende Kerbschlagzähigkeitswerte enthalten. Dies ist mit den heute auf dem Markt befindlichen AFP-Stählen entsprechender Festigkeit nicht möglich.

Aufgrund der wesentlich höheren Masse der NFZ-Teile kühlen diese deutlich anders von der Warmformgebungstemperatur ab als PKW-Teile. Da die Temperaturführung entscheidenden Einfluß auf die erreichbaren mechanischen Kennwerte hat (s.o.), können mit den heute verfügbaren AFP-Stählen an NFZ-Teilen selbst die bei PKW-Teilen üblichen niedrigeren mechanischen Kennwerte meist nicht realisiert werden.

Eine in den vergangenen Jahren verfolgte werkstofftechnische Entwicklungsrichtung im NFZ-Fahrwerksbereich hatte das Ziel, durch eine Direktvergütung niedrig gekohlter Stähle aus der Umformwärme ohne nachfolgendes Anlassen eine untere bainitische Gefügestruktur einzustellen und so die teure Schlussvergütung einzusparen (s. DE-PS 36 28 264 A1, DE-PS 41 24 704 A1, US-PS 5,660,648). Problematisch ist bei dieser Technologie jedoch das niedrige Streckgrenzenverhältnis, die relativ geringe Dauerfestigkeit und die Inhomogenität der Eigenschaften sowie eine verstärkte Verzugsneigung. Sie hat sich im Bereich der sicherheitsrelevanten Fahrwerksteile für NFZ nicht durchgesetzt.

Auf dem Gebiet der AFP-Stähle mit ferritisch-perlitischer Struktur wurden einige Entwicklungsarbeiten mit dem Ziel einer Verbesserung der Zähigkeit durchgeführt, um diese Stahlgruppe auch im NFZ-Fahrwerksbereich einsetzen zu können (s. Hertogs, J.A.; Ravenshorst, H; Richter, K.E.; Wolff, J.: Neuere Anwendungen der ausscheidungshärtenden ferritisch-perlitischen Stähle für geschmiedete Bauteile im Motor und Fahrwerk. Konferenz "Stahl im Automobilbau", Würzburg, 24.-26.9.1990; und Huchtemann, B.; Schüler, V.: Entwicklungsstand der ausscheidungshärtenden ferritisch-perlitischen (AFP-) Stähle mit Vanadium. Stahl 2/1992, S.36-41). Dabei wurden z.B. durch eine Absenkung der Umformtemperatur leichte Verbesserungen erzielt. Da aber das Formfüllungsverhalten bei abgesenkten Umformtemperaturen deutlich schlechter ist und darüber hinaus der Werkzeugverschleiß drastisch ansteigt, war diese Variante für einen betrieblichen Einsatz nicht geeignet.

Eine weitere Variante setzte auf Titan-Legierungszusätze zur Kornfeinung und daraus folgend zur Zähigkeitsverbesserung. Das Problem dabei war, dass die Kornfeinung durch Titannitride erreicht wurde. Dadurch wurde der zur Festigkeitssteigerung benötigte Stickstoff abgebunden. Die Folge war eine im Vergleich zu Vergütungsstählen weit unterlegene Festigkeit.

Die der Erfindung zugrundeliegende Aufgabe besteht daher darin, eine Stahlzusammensetzung für AFP-Stähle zur Herstellung von Gesenkschmiedeteilen bereitzustellen, die ohne eine zusätzliche Wärmebehandlung eine hohe Festigkeit bei gleichzeitig hoher Zähigkeit in diesen Bauteilen aufweist, so dass sie als Fahrwerksteile auch für NFZ einsetzbar sind.

Die Aufgabe wird gelöst durch eine Stahlzusammensetzung, die die folgenden Bestandteile in Gewichtsprozent umfasst:

| | |
|---|---|
| C | 0,12-0,45 |
| Si | 0,10-1,00 |
| Mn | 0,50-1,95 |
| S | 0,005-0,060 |

(fortgesetzt)

| Al | 0, 004-0, 050 |
|---|---|
| Ti | 0, 004-0, 050 |
| Cr | 0-0,60 |
| Ni | 0-0,60 |
| Co | 0-0, 60 |
| W | 0-0,60 |
| B | 0-0,01 |
| Mo | 0-0,60 |
| Cu | 0-0,60 |
| Nb | 0-0,050 |
| V | 0,10-0,40 |
| N | 0,015-0,040 |

Rest : Fe und unvermeidbare Verunreinigungen
mit den Maßgaben:

1) Gew%V x Gew%N =0,0021 bis 0,0120

2) $1,6 \times$ Gew%S + 1,5xGew%Al + 2,4xGew%Nb + 1,2xGew%Ti = 0,035 bis 0,140

3) 1,2xGew%Mn + 1,4xGew%Cr + 1,0xGew%Ni + 1,1xGew%Cu + 1,8xGew%Mo = 1,00 bis 3,50

Ein zentraler Punkt der Erfindung ist, daß die notwendige Zähigkeitsverbesserung durch eine Absenkung des Kohlenstoffgehaltes im Stahl erreicht wird, verglichen mit den heute auf einer gegebenen Festigkeitsstufe üblichen Konzentrationen. Der nach dem Stand der Technik durch diese Maßnahme zu erwartende Festigkeitsverlust wird erfindungsgemäß durch die spezielle Kombination der übrigen Bestandteile nicht nur vollständig eliminiert sondern sogar überkompensiert. Wesentliche Faktoren, die für die hohe Festigkeit trotz Absenkung des Kohlenstoffgehaltes verantwortlich sind, sind insbesondere:

-    Ein Vanadium-Gehalt von 0,10 Gew% bis 0,40 Gew% und ein Stickstoffgehalt von 0,015 Gew% bis 0,040 Gew%, wobei erfindungsgemäß folgende Bedingung einzuhalten ist:

Gew%V x Gew%N = 0,0021 bis 0,0120

-    Ein abgestimmtes Verhältnis der Mikrolegierungselemente Ti, Al und Nb mit dem Schwefel, wobei erfindungsgemäß folgende Bedingung einzuhalten ist:

$1,6 \times$Gew%S + 1,5xGew%Al + 2,4xGew%Nb + 1,2xGew%Ti = 0,035 bis

0,140

-    Ein abgestimmtes Verhältnis der Mischkristallverfestigenden Legierungselemente, wobei erfindungsgemäß folgende Bedingung einzuhalten ist:

1,2x%Mn + 1,4x%Cr + 1,0x%Ni + 1,1x%Cu + 1,8x%Mo = 1,00 bis

3,50

Die oben beschriebene Stahlzusammensetzung eignet sich hervorragend zur Herstellung von Gesenkschmiedeteilen, die als Fahrwerksteile, wie z.B. Achsschenkel, für Personenkraftwagen oder Nutzfahrzeuge verwendet werden können.

Die erfindungsgemäßen Gesenkschmiedeteile werden über ein Verfahren hergestellt, das die folgenden Schritte umfasst:

(a) Erwärmen des Vormaterials aus einer Stahlzusammensetzung wie oben definiert auf eine Temperatur von 1000 bis 1300 °C;

(b) Umformen des Vormaterials aus Schritt (a) durch Verschmieden;

(c) Abkühlen des in Schritt (b) erhaltenen Gesenkschmiedeteiles auf Raumtemperatur, wobei in dem Temperaturbereich bis 580 °C die Kühlrate mindestens 0,2 °C/s beträgt.

Das erfindungsgemäße Herstellungsverfahren wird im folgenden in bezug auf einzelne Herstellungsschritte näher beschrieben.

Zunächst wird in einem Schritt (a) ein aus der erfindungsgemäßen Stahlzusammensetzung hergestelltes Vormaterial in einer handelsüblichen Geometrie, z.B. Langstahl, auf 1000 bis 1300 °C erwärmt. Das Material wird in diesem Temperaturbereich mindestens solange gehalten, bis sich ein homogenes austenitisches Gefüge gebildet hat. Gewöhnlich beträgt die Dauer 5 bis 10 min. Wenn das Gesenkschmiedeteil als Fahrwerksteil für Nutzfahrzeuge verwendet werden soll, ist es bevorzugt, dass das Vormaterial eine Masse von mehr als 15 kg aufweist. Für Gesenkschmiedeteile, die als Fahrwerksteile in Personenkraftwagen eingesetzt werden, wird gewöhnlich ein Vormaterial mit einer Masse zwischen 5 und 14 kg verwendet.

In Schritt (b) wird das Vormaterial in einem üblichen Umformprozess mit einem oder mehreren Umformschritten durch Verschmieden in die gewünschte Form umgeformt. Vorzugsweise erfolgt der Umformprozess in Schritt (b) unmittelbar nach der Erwärmung des Vormaterials in Schritt (a), so dass das Vormaterial während seiner Umformung eine Temperatur im Bereich von 950 und 1250 °C aufweist.

In Schritt (c) wird das in Schritt (b) erhaltene Gesenkschmiedeteil auf Raumtemperatur abgekühlt. Dabei beträgt die Kühlrate bis zu einer Temperatur von 580 °C mindestens 0,2 °C/s.

Durch die Kühlrate lassen sich die mechanischen Eigenschaften des Gesenkschmiedeteils je nach Anforderung definiert einstellen.

Die Kühlrate bei der Abkühlung der Gesenkschmiedeteile aus dem erfindungsgemäßen Stahl auf 580 °C wird vorzugsweise im Bereich von 0,2 bis 6 °C/s gewählt. Noch bevorzugter ist eine Kühlrate im Bereich von 0,2 bis 0,6 °C/s. Dies entspricht der Abkühlung von schweren NFZ-Teilen an ruhender Luft. Dies hat den Vorteil, dass das NFZ-Gesenkschmiedeteil aus Schritt (b) lediglich durch Stehen lassen an der Luft abgekühlt werden kann.

Im Hinblick auf die Erzielung von besonders hohen Festigkeits- und Zähigkeitswerten, wie sie bei Fahrwerksteilen für Nutzfahrzeuge gefordert sind, ist eine Kühlrate bis 580 °C von 0,7 °C/s bis 6 °C/s besonders bevorzugt. Die Einstellung einer Kühlrate in diesem Bereich erfolgt für NFZ-Teile mit einer Masse von über 15kg z.B. mittels einer Wasserkühlstrecke, die hinsichtlich der Anzahl der aktiven Wasserdüsen und deren Ausrichtung sowie hinsichtlich des Druckes und der Durchflussmenge flexibel ist.

Für die leichteren PKW-Teile aus dem erfindungsgemäßen Stahl gelten die gleichen Zusammenhänge zwischen Kühlrate und Eigenschaften. Aufgrund der geringeren Masse von PKW-Teilen ist zur Einstellung der Kühlrate im Unterschied zu den NFZ-Teilen nur dann eine beschleunigte Kühlung erforderlich, wenn die Kühlrate in der oberen Hälfte des angegebenen Bereiches liegen soll. Kühlraten von etwa 0,7 bis etwa 2,0 °C/s stellen sich bereits bei Kühlung an ruhender Luft automatisch ein.

Die Kühlrate unterhalb von 580 °C kann beliebig gewählt werden und hat im Hinblick auf die Festigkeit und Zähigkeit des erhaltenen Gesenkschmiedeteils keinen Einfluss.

Das erfindungsgemäß hergestellte Gesenkschmiedeteil weist nach dem Abkühlen von der Umformwärme die folgenden mechanischen Eigenschaften auf:

- Zugversuch nach DIN EN 10002 bei Raumtemperatur:

    Streckgrenze: $Rp_{0.2} \geq 540$ MPa, bevorzugt 540-850 MPa
    Zugfestigkeit: $Rm \geq 700$ MPa, bevorzugt 700-1100 MPa
    Bruchdehnung: A5 $\geq 10$ %, bevorzugt 10-16 %
    Brucheinschnürung: Z $\geq 20$%, bevorzugt 20-50 %

- Kerbschlagbiegeversuch an ISO-U-Proben gemäß DIN EN 50115:

    Kerbschlagarbeit: Av(RT) $\geq 30$ J, bevorzugt 30-70 J
    Kerbschlagarbeit: Av(-20°C) $\geq 10$ J, bevorzugt 10-25 J

Ein Gesenkschmiedeteil, das nach dem besonders bevorzugten Verfahren hergestellt ist, kann, abhängig von der gewählten Kühlrate, die folgenden mechanischen Kennwerte aufweisen.

$Rp_{0.2}$ = 580-680 MPa
Rm = 800-900 MPa
A5 = 14-16 %
Z = 35-50 %
Av(RT) = 30-40 J.
Av(-20°C) = 10-20 J.

Ebenso sind nach dem besonders bevorzugten Verfahren Gesenkschmiedeteile mit den folgenden Eigenschaften herstellbar:

$Rp_{0.2}$ = 800-850 MPa
Rm = 1050-1100 MPa
A5 = 10-12 %
Z = 20-30 %

Durch die obigen Eigenschaften wird deutlich, dass die erfindungsgemäßen Gesenkschmiedeteile nach Abkühlen von der Umformwärme im Vergleich zum Stand der Technik eine hohe Festigkeit bei gleichzeitig hoher Zähigkeit aufweisen. Daher sind die erfindungsgemäßen Gesenkschmiedeteile als sicherheitsrelevante Fahrwerkskomponenten, wie z.B. Achsschenkel, für Personenkraftwagen und sogar für Nutzfahrzeuge einsetzbar.

Die Erfindung wird anhand der folgenden Beispiele näher erläutert.

Beispiel 1

Verwendung eines Stahls mit folgender chemischer Zusammensetzung:

| | |
|---|---|
| C | 0,14 Gew% |
| Si | 0,40 Gew% |
| Mn | 1,00 Gew% |
| S | 0,020 Gew% |
| Al | 0,035 Gew% |
| Ti | 0,015 Gew% |
| Nb | 0,005 Gew% |
| Cr | 0,45 Gew% |
| Ni | 0,10 Gew% |
| Cu | 0,15 Gew% |
| Mo | 0,10 Gew% |
| V | 0,25 Gew% |
| N | 0,030 Gew% |

Induktive Erwärmung des Stabstahls mit einer Querschnitt von 140 mm$^2$ auf 1250 °C und halten des Stahls auf dieser Temperatur für 10 Minuten.

Verschmieden des Vierkantmaterials zu einem Achsschenkel mit 30 kg Masse in einer Vorstauchoperation, 2 Fertigformoperationen und einer Abgratoperation. Die Temperatur des Achsschenkels am Ende des Umformprozesses beträgt 1100 °C.

Abkühlen des Achsschenkels von 1100°C auf 580°C auf einer Kühlstrecke mit einer Kühlrate von 3,9°C/s.

Der Achsschenkel weist die folgenden gemäß DIN EN 10002 bei Raumtemperatur und DIN EN 50115 bestimmten mechanischen Eigenschaften auf:

$Rp_{0.2}$=580 MPa,
Rm = 750 MPa
A5=16%
Z= 55%
Av(Raumtemperatur)=50 J
Av(-20°C) = 20 J

Beispiel 2

Verwendung eines Stahls mit folgender chemischer Zusammensetzung:

| C | 0,37 Gew% |
|---|---|
| Si | 0,40 Gew% |
| Mn | 0,90 Gew% |
| S | 0,035 Gew% |
| Al | 0,015 Gew% |
| Ti | 0,035 Gew% |
| Nb | 0,010 Gew% |
| Cr | 0,10 Gew% |
| Ni | 0,50 Gew% |
| Cu | 0,20 Gew% |
| Mo | 0,10 Gew% |
| V | 0,28 Gew% |
| N | 0,032 Gew% |

Induktive Erwärmung des Stabstahls mit einer Querschnitt von 140mm$^2$ auf 1250 °C und halten des Stahls auf dieser Temperatur für 10 Minuten.

Verschmieden des Vierkantmaterials zu einem Achsschenkel mit 38 kg Masse in einer Vorstauchoperation, 2 Fertigformoperationen und einer Abgratoperation. Die Temperatur des Achsschenkels am Ende des Umformprozesses beträgt 1150 °C.

Abkühlen des Achsschenkels von 1150 °C auf 580 °C an ruhender Luft mit einer Kühlrate von 0,5 °C/s.

Der Achsschenkel weist die folgenden gemäß DIN EN 10002 bei Raumtemperatur bestimmten mechanischen Eigenschaften auf:

$Rp_{0.2}$ = 700 MPa
Rm = 1000 MPa
A5 = 12 %
Z = 30 %

Beispiel 3

Verwendung eines Stahls gemäß Beispiel 2

Erwärmung und Umformung des 38kg schweren Achsschenkels gemäß Beispiel 2.

Abkühlen des Achsschenkels von 1150°C auf 580°C auf einer Kühlstrecke mit einer Kühlrate von 1,8°C/s.

Der Achsschenkel weist die folgenden gemäß DIN EN 10002 bei Raumtemperatur bestimmten mechanischen Eigenschaften auf:

$Rp_{0·2}$ = 820 MPa
Rm = 1080 MPa
A5 = 10 %
Z = 20 %

**Patentansprüche**

1.    Stahlzusammensetzung, **dadurch gekennzeichnet, dass** sie die folgenden Bestandteile in Gewichtsprozent umfasst:

| C | 0,12-0,45 |
|---|---|
| Si | 0,10-1,00 |
| Mn | 0,50-1,95 |
| S | 0,005-0,060 |
| Al | 0,004-0,050 |
| Ti | 0,004-0,050 |
| Cr | 0-0, 60 |
| Ni | 0-0,60 |

(fortgesetzt)

| | |
|---|---|
| Co | 0-0,60 |
| W | 0-0, 60 |
| B | 0-0,01 |
| Mo | 0-0,60 |
| Cu | 0-0,60 |
| Nb | 0-0,050 |
| V | 0,10-0,40 |
| N | 0,015-0,040 |

Rest : Fe und unvermeidbare Verunreinigungen
mit den Maßgaben:

1) Gew%V x Gew%N = 0,0021 bis 0,0120

2) 1,6xGew%S + 1,5xGew%Al + 2,4xGew%Nb + 1,2xGew%Ti = 0,035 bis 0,140

3) 1,2xGew%Mn + 1,4xGew%Cr + 1,0xGew%Ni + 1,1xGew%Cu + 1,8xGew%Mo = 1,00 bis 3,50

**2.** Gesenkschmiedeteil aus Stahl, **dadurch gekennzeichnet, dass** der Stahl eine Zusammensetzung gemäß Anspruch 1 besitzt.

**3.** Verfahren zur Herstellung eines Gesenkschmiedeteils gemäß Anspruch 2, umfassend die Schritte

(a) Erwärmen des Vormaterials aus einer Stahlzusammensetzung gemäß Anspruch 1 auf eine Temperatur von 1000 bis 1300 °C;

(b) Umformen des Vormaterials aus Schritt (a) durch Verschmieden;

(c) Abkühlen des in Schritt (b) erhaltenen Gesenkschmiedeteiles auf Raumtemperatur, wobei in dem Temperaturbereich bis 580 °C die Kühlrate mindestens 0,2 °C/s beträgt.

**4.** Verfahren gemäß Anspruch 3, **dadurch gekennzeichnet, dass** das Abkühlen in Schritt (c) bis zu einer Temperatur von 580 °C mit einer Kühlrate von 0,2 °C/s bis 0,6 °C/s erfolgt.

**5.** Verfahren gemäß Anspruch 3, **dadurch gekennzeichnet, dass** das Abkühlen in Schritt (c) bis zu einer Temperatur von 580 °C mit einer Kühlrate von 0,7 °C/s bis 6 °C/s erfolgt.

**6.** Verwendung des Gesenkschmiedeteils, erhältlich durch das Verfahren gemäß einem der Ansprüche 3 bis 5, als Fahrwerksteil für Nutzfahrzeuge.

**7.** Verwendung des Gesenkschmiedeteils, erhältlich durch das Verfahren gemäß Anspruch 5, als Fahrwerksteil für PKW.

**Europäisches**
**Patentamt**

**EUROPÄISCHER RECHERCHENBERICHT**

Nummer der Anmeldung

EP 02 02 1820

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 1995, no. 09, 31. Oktober 1995 (1995-10-31) -& JP 07 157824 A (NIPPON STEEL CORP), 20. Juni 1995 (1995-06-20) * Zusammenfassung; Beispiel 8; Tabelle 1 * * Absätze [0032],[0033] * --- | 1-7 | C22C38/00 C22C38/12 C21D7/13 |
| X | PATENT ABSTRACTS OF JAPAN vol. 1997, no. 11, 28. November 1997 (1997-11-28) -& JP 09 194999 A (SUMITOMO METAL IND LTD), 29. Juli 1997 (1997-07-29) * Zusammenfassung; Beispiel 3; Tabelle 1 * * Absatz [0046] * --- | 1-7 | |
| X | PATENT ABSTRACTS OF JAPAN vol. 1995, no. 07, 31. August 1995 (1995-08-31) -& JP 07 102340 A (NIPPON STEEL CORP), 18. April 1995 (1995-04-18) * Zusammenfassung; Beispiel 8; Tabelle 1 * --- | 1-7 | |
| X | PATENT ABSTRACTS OF JAPAN vol. 017, no. 093 (C-1029), 24. Februar 1993 (1993-02-24) -& JP 04 285118 A (NIPPON STEEL CORP), 9. Oktober 1992 (1992-10-09) * Zusammenfassung; Tabelle 1 * --- | 1,2 | RECHERCHIERTE SACHGEBIETE (Int.Cl.7) C22C C21D |
| X | PATENT ABSTRACTS OF JAPAN vol. 1996, no. 07, 31. Juli 1996 (1996-07-31) -& JP 08 060236 A (KOBE STEEL LTD;MAZDA MOTOR CORP), 5. März 1996 (1996-03-05) * Zusammenfassung; Beispiel 17; Tabelle 1 * --- | 1 | |

-/--

Der vorliegende Recherchenbericht wurde für alle Patentansprüche erstellt

| Recherchenort | Abschlußdatum der Recherche | Prüfer |
|---|---|---|
| MÜNCHEN | 9. Dezember 2002 | Swiatek, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................

& : Mitglied der gleichen Patentfamilie, übereinstimmendes Dokument

EPO FORM 1503 03.82 (P04C03)

**Europäisches Patentamt**

## EUROPÄISCHER RECHERCHENBERICHT

Nummer der Anmeldung

EP 02 02 1820

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A,D | EP 0 648 853 A (NIPPON STEEL CORP) 19. April 1995 (1995-04-19) * das ganze Dokument * --- | 1-7 | |
| A | EP 1 051 531 A (ASCOMETAL SA) 15. November 2000 (2000-11-15) * das ganze Dokument * ----- | 1-7 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| MÜNCHEN | 9. Dezember 2002 | Swiatek, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 02 02 1820

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-12-2002

| Im Recherchenbericht angeführtes Patentdokument | Datum der Veröffentlichung | Mitglied(er) der Patentfamilie | Datum der Veröffentlichung |
|---|---|---|---|
| JP 07157824 A | 20-06-1995 | KEINE | |
| JP 09194999 A | 29-07-1997 | KEINE | |
| JP 07102340 A | 18-04-1995 | JP 3261552 B2 | 04-03-2002 |
| JP 04285118 A | 09-10-1992 | KEINE | |
| JP 08060236 A | 05-03-1996 | KEINE | |
| EP 0648853 A | 19-04-1995 | JP 3139876 B2 | 05-03-2001 |
| | | JP 6287679 A | 11-10-1994 |
| | | DE 69418565 D1 | 24-06-1999 |
| | | DE 69418565 T2 | 14-10-1999 |
| | | EP 0648853 A1 | 19-04-1995 |
| | | US 5660648 A | 26-08-1997 |
| | | WO 9423085 A1 | 13-10-1994 |
| EP 1051531 A | 15-11-2000 | FR 2774098 A1 | 30-07-1999 |
| | | AT 204924 T | 15-09-2001 |
| | | BR 9907926 A | 28-11-2000 |
| | | DE 69900247 D1 | 04-10-2001 |
| | | DE 69900247 T2 | 18-04-2002 |
| | | DK 1051531 T3 | 07-01-2002 |
| | | EP 1051531 A1 | 15-11-2000 |
| | | JP 2002501985 T | 22-01-2002 |
| | | PL 342058 A1 | 21-05-2001 |
| | | SI 20334 A | 28-02-2001 |
| | | CZ 20002768 A3 | 16-01-2002 |
| | | ES 2162514 T3 | 16-12-2001 |
| | | WO 9939018 A1 | 05-08-1999 |
| | | PT 1051531 T | 28-02-2002 |
| | | TR 200002200 T2 | 21-11-2000 |

EPO FORM P0461

Für nähere Einzelheiten zu diesem Anhang : siehe Amtsblatt des Europäischen Patentamts, Nr.12/82